# EUROPÄISCHE PATENTSCHRIFT

(11) **EP 1 230 700 B1**
(45) Veröffentlichungstag und Bekanntmachung des Hinweises auf die Patenterteilung: **20.08.2003**
(21) Anmeldenummer: 00982924.3
(22) Anmeldetag: 26.09.2000
(51) Int. Cl.: H01M 8/00

(54) **VORRICHTUNG ZUR ZUFUHR FLÜSSIGER MEDIEN ZU VERBRAUCHERN EINER BRENNSTOFFZELLENANLAGE**
DEVICE FOR SUPPLYING THE CONSUMERS OF A FUEL CELL SYSTEM WITH LIQUID MEDIA
DISPOSITIF D'AMENEE DE MILIEUX LIQUIDES A DES RECEPTEURS D'UN ENSEMBLE DE PILES A COMBUSTIBLE

(30) Priorität: 30.09.1999 DE 19947254
(43) Veröffentlichungstag der Anmeldung: 14.08.2002
(73) Patentinhaber: ROBERT BOSCH GMBH, 70442 Stuttgart (DE)
(72) Erfinder: RUOFF, Manfred, 71696 Möglingen (DE); NAU, Michael, 72175 Dornhan/Aischfeld (DE); BAREIS, Marc, 71706 Markgroeningen (DE); HARNDORF, Horst, 71701 Schwieberdingen (DE); ILGNER, Frank, 70499 Stuttgart (DE)
(86) Internationale Anmeldenummer: DE0003340
(87) Internationale Veröffentlichungsnummer: WO01024294

(56) Entgegenhaltungen:
- US-A- 5 766 786
- PATENT ABSTRACTS OF JAPAN vol. 012, no. 249 (P-730), 14. Juli 1988 (1988-07-14) -& JP 63 040901 A (MITSUBISHI ELECTRIC CORP), 22. Februar 1988 (1988-02-22)
- PATENT ABSTRACTS OF JAPAN vol. 1997, no. 05, 30. Mai 1997 (1997-05-30) -& JP 09 022713 A (AGENCY OF IND SCIENCE &TECHNOL), 21. Januar 1997 (1997-01-21)
- PATENT ABSTRACTS OF JAPAN vol. 008, no. 084 (E-239), 18. April 1984 (1984-04-18) -& JP 59 005571 A (SHINKOUBE DENKI KK), 12. Januar 1984 (1984-01-12)

## Beschreibung

Die Erfindung betrifft eine Vorrichtung zur Zufuhr flüssiger Medien zu Verbrauchern einer Brennstoffzellenanordnung.

### Stand der Technik

Insbesondere im Zusammenhang mit künftigen Antriebskonzepten von Fahrzeugen gewinnt die Brennstoffzellentechnologie immer mehr an Bedeutung. Brennstoffzellen bieten die Möglichkeit, chemisch gebundene Energie direkt in elektrische Energie umzuwandeln, die anschließend mit Hilfe eines Elektromotors in mechanische Antriebsenergie überführt werden kann. Im Gegensatz zu Wärmekraftmaschinen ist der Wirkungsgrad einer Brennstoffzelle nicht durch einen Carnot'schen Wirkungsgrad begrenzt. Derzeit bevorzugte Brennstoffzellen verbrauchen Wasserstoff und Sauerstoff und setzen diese Elemente in das umweltfreundliche Endprodukt Wasser um.

Aufgrund der technischen Probleme bei der Wasserstoffspeicherung in Fahrzeugen ist man dazu übergegangen, den Wasserstoff bei Bedarf durch eine sogenannte Reformierung oder partielle Oxidation von Kohlenwasserstoffen zu erzeugen. Derartige Kohlenwasserstoffe liegen in Form herkömmlicher Kraftstoffe wie Benzin und Diesel vor, es könnten jedoch auch andere Kohlenwasserstoffe, beispielsweise Methan oder Methanol, hierzu verwendet werden.

In Verbindung mit einem Brennstoffzellenantrieb stellen sich an die entsprechende Vorrichtung zur chemischen Umsetzung, d. h. der Reformierung der Kraftstoffe in Wasserstoff gegenüber bisherigen chemischen Anlagen, besondere Anforderungen.

Eine derartige Anordnung muss einer erheblichen Lastspreizung, d. h. große Unterschiede im benötigten Volumenstrom an Wasserstoff und dementsprechend auch der zur Erzeugung des Wasserstoffs erforderlichen Medien, gerecht werden, wobei ein entsprechendes dynamisches Verhalten zur Erzeugung der gewünschten Schwankungen im Volumenstrom der Medien innerhalb kurzer Zeiten gewährleistet sein muss. Daneben muss eine solche Anordnung ein gutes Kaltstartverhalten und eine große Betriebssicherheit bieten. Weitere Anforderungen im Hinblick auf die Wirtschaftlichkeit bedingen ein geringes Gewicht in Verbindung mit einem kleinen Volumen und insbesondere niedrigen Herstellungskosten.

Bei Brennstoffzellenanordnungen der beschriebenen Art sind zum einen verschiedene Medien, d. h. beispielsweise Wasser, Kraftstoff sowie Luft, zuzuführen. Zum anderen muss ein und dasselbe Medium, beispielsweise Kraftstoff, an unterschiedliche Anlagenkomponenten angeliefert werden. Je nach Ausgestaltung der Brennstoffzellenanordnung kann beispielsweise ein Brenner zur Erzeugung von Reaktionswärme zum Umformen des Kraftstoffs sowie der sogenannte Reformer, in dem der Kraftstoff umgeformt wird, oder ein etwaiger vorgeschalteter Verdampfer mit demselben Kraftstoff versorgt werden.

Ebenso sind in der Regel verschiedene Komponenten mit Wasser zu versorgen, beispielsweise wiederum der Reformer zur Umsetzung des Kraftstoffs, dem hierzu wiederum gegebenenfalls ein Verdampfer vorgeschaltet sein kann, sowie beispielsweise eine dem Reformer nachgeschaltete Einheit zur Durchführung einer sogenannten "Shift-Reaktion", in der aus der Reaktion im Reformer resultierende Restmengen von CO unter Zusatz von Wasser zu CO₂ aufoxidiert werden, wobei wiederum Wasserstoff freigesetzt wird.

Bislang wird für jeden einzurichtenden Mengenstrom bei derartigen Brennstoffzellenanordnungen eine sogenannte Dosierpumpe verwendet, mittels der die jeweils benötigte Stoffmenge des jeweiligen Mediums zugeführt wird. Derartige Dosierpumpen sind sehr aufwendig und entsprechend kostenträchtig.

### Vorteile der Erfindung

Demgegenüber hat die Erfindung die Aufgabe, eine Vorrichtung zur Zulieferung von Medien für eine Brennstoffzellenanlage vorzuschlagen, die den oben angeführten Anforderungen gerecht wird und eine kostengünstige Fertigung ermöglicht.

Diese Aufgabe wird ausgehend von einem Stand der Technik der einleitend genannten Art durch die kennzeichnenden Merkmale des Anspruchs 1 gelöst.

Dementsprechend zeichnet sich eine erfindungsgemäße Vorrichtung dadurch aus, dass zwischen der Förderpumpe und dem jeweiligen Verbraucher der Brennstoffzellenanordnung ein steuerbares Dosierventil vorgesehen ist. Durch diese Anordnung erfolgt die Dosierung über das Ventil, während die Förderpumpe lediglich den Förderdruck des jeweiligen Mediums aufrechterhalten muss, jedoch nicht mehr zur Dosierung verwendet wird. Dementsprechend kann die Förderpumpe erheblich weniger aufwendig und damit kostengünstiger ausgestaltet werden.

In einer vorteilhaften Weiterbildung der Erfindung werden mehrere Verbraucher, die mit dem gleichen Medium beliefert werden, jeweils mit wenigstens einem steuerbaren Dosierventil versehen, jedoch über dieselbe Förderpumpe mit dem Medium gespeist. Durch die Zwischenschaltung der Dosierventile kann somit auch die Anzahl der Förderpumpen reduziert werden, da für mehrere Verbraucher bzw. mehrere Stoffströme des gleichen Mediums dieselbe Pumpe verwendbar ist. Die Dosierung erfolgt dabei über entsprechend kostengünstige Dosierventile.

Derartige Dosierventile könnten beispielsweise als steuerbare Drossel in der Medienleitung ausgebildet werden, mittels denen der Volumenstrom in der jeweiligen Leitung eingestellt werden kann.

In einer besonderen Ausführungsform der Erfindung wird jedoch als Dosierventil ein getaktetes Schaltventil verwendet. Ein derartiges getaktetes Schaltventil ist erheblich preisgünstiger erhältlich als ein Mengenregler. Die Steuerung des Volumenstroms erfolgt bei der Verwendung eines getakteten Ventils durch die Einstellung der Taktfrequenz bzw. dem Verhältnis zwischen der Einschaltzeit und Ausschaltzeit innerhalb eines Taktes des Schaltventils.

Gegenüber einem Mengenregler ist jedoch hierbei der Volumenstrom nicht mehr kontinuierlich, sondern dem Takt des Dosierventils unterworfen. Um dennoch eine quasi kontinuierliche Medienzufuhr zu gewährleisten, empfiehlt sich die Verwendung von Dosierventilen, die mit einer vergleichsweisen großen Taktfrequenz zu betreiben sind. Die Taktfrequenz wird vorzugsweise größer als 10 Hz gewählt. Je höher die Taktfrequenz gewählt wird, um so kontinuierlicher bildet sich der nach dem Dosierventil vorliegende Volumenstrom aus. Der Taktfrequenz sind somit nach oben lediglich die Grenzen der technischen Realisierbarkeit des Dosierventils gesetzt.

Vorteilhafterweise wird die Steuerung des Volumenstroms über ein Kennfeld vorgenommen. Eine derartige Steuerung ist mit wenig Aufwand realisierbar, indem die mit verschiedenen Stellgrößen sich ergebende Volumenstromgrößen gemessen und in einer Steuereinheit im Speicher in Form eines Kennfelds abgelegt werden. Der je nach Bedarf gewünschte Volumenstrom kann sodann durch die im Kennfeld abgespeicherten zugehörigen Werte für die Stellgrößen reproduziert werden.

In einer technisch vorteilhaften, jedoch aufwendigeren Weiterbildung der Erfindung wird eine Regelung des Volumenstroms vorgesehen. Auf diese Weise kann schwankenden oder nicht reproduzierbaren Störgrößen je nach Ausgestaltung der Zufuhrvorrichtung beziehungsweise der gesamten Anlage Rechnung getragen werden.

Als Regelgröße wird hierzu der Volumenstrom hinter dem Dosierventil verwendet, der in einer bestimmten Ausführungsform der Leitung an dieser Stelle gemessen wird.

Eine weniger aufwendige Messvorrichtung lässt sich in Form eines Druckaufnehmers realisieren. Da das Dosierventil nahezu keine hydraulische Induktivität und Kapazität aufweist, läßt sich aus dem momentan gemessenen Druck, der bekannten Einschaltzeit, der Taktfrequenz und dem Vordruck der Volumenstrom berechnen.

Die Umsetzung des Mediumdrucks in den gewünschten Volumenstrom kann beispielsweise rechnerisch bei Kenntnis einer zugehörigen mathematischen Funktion erfolgen. In einer besonders einfachen Ausführungsform wird jedoch auch hierzu wiederum ein in der Steuereinheit abgelegtes Kennfeld verwendet, mittels dem einem bestimmten gemessenen Druck unmittelbar der Wert des zugehörigen Volumenstroms zugeordnet ist.

In einer besonderen Weiterbildung der Erfindung wird die Förderpumpe steuerbar ausgebildet. Die Drehzahl der Pumpe kann somit an den gewünschten Förderdruck sowie die gewünschte Förderleistung angepasst werden. Insbesondere bei geringen Fördermengen kann hierbei durch die Reduzierung der Pumpenleistung eine entsprechende Energieeinsparung vorgenommen werden.

Weiterhin wird vorteilhafterweise ein Druckregler in einer Bypassleitung von der Pumpe zu einem Vorratstank vorgesehen. Mit Hilfe eines solchen Druckreglers lässt sich der Förderdruck der Pumpe drehzahlunabhängig konstant halten. Je nach benötigtem Volumenstrom fließt dann ein entsprechend anfallender Teilstrom über den Druckregler zurück in den Vorratstank.

In diesem Zusammenhang ergibt sich durch die steuerbare Pumpe der weitere Vorteil, dass die durch die Umwälzung in der Bypassleitung auftretende Verlustleistung reduziert werden kann, wodurch zum einen Energie eingespart und eine übermäßige Erwärmung des Mediums vermieden werden. Insbesondere im Falle von leicht flüchtigem Kraftstoff wäre eine deutliche Erwärmung im Vorratstank eine unbedingt zu vermeidende Gefahrenquelle durch die dadurch entstehenden Dämpfe. Durch eine übermäßige Kraftstofferwärmung ergibt sich weiterhin die Gefahr unerwünschter Kraftstoff-Dampfemissionen aus dem Kraftstofftank, die gerade bei einer Brennstoffzellenanordnung vermieden werden sollen.

Vorzugsweise wird der Druckregler in der Bypassleitung ebenfalls steuerbar ausgebildet, so dass je nach Bedarf auch der Vordruck des Mediums vor den Dosierventilen eingestellt und als Stellgröße für die Dosierung verwendet werden kann.

### Ausführungsbeispiel

Ein Ausführungsbeispiel der Erfindung ist in der Zeichnung dargestellt und wird anhand der Figuren nachfolgend näher erläutert.

Im Einzelnen zeigen
- Fig. 1: ein Verfahrensfließbild zur beispielhaften Darstellung der verschiedenen Stoffmengenströme in einer Brennstoffzellenanlage,
- Fig. 2: ein erstes Ausführungsbeispiel der Erfindung in einem schematischen Diagramm und
- Fig. 3: ein zweites Ausführungsbeispiel der Erfindung.

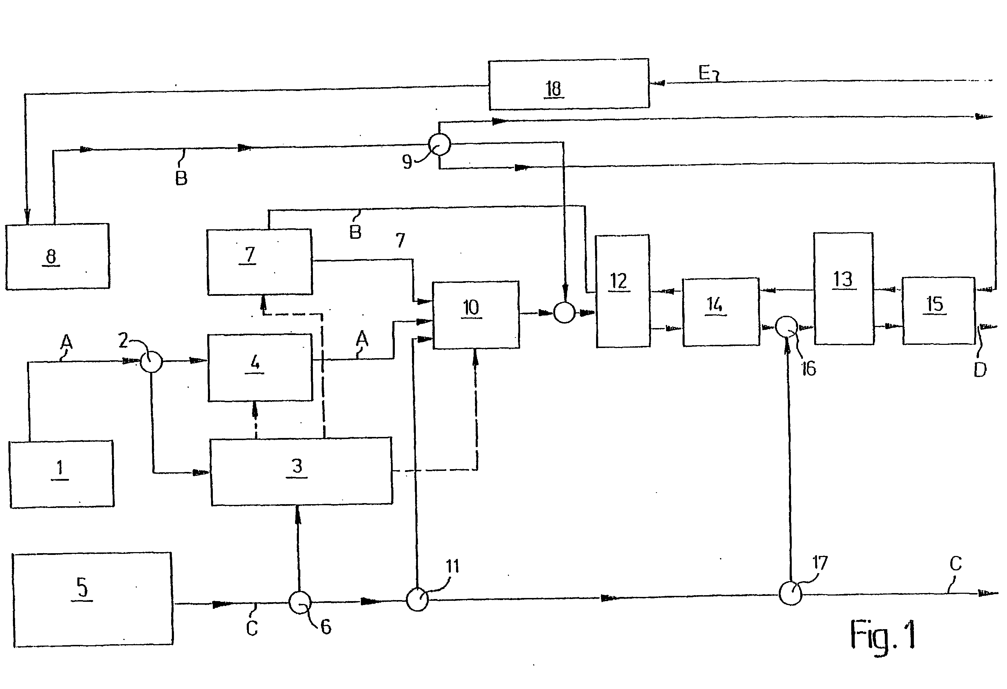

In der Fig. 1 sind die durchgezogenen Linien für Stoffströme und die gestrichelten Linien für die Einbringung von Energie verwendet.

Ein Kraftstofftank 1 versorgt über eine entsprechende Verzweigung 2 einen Brenner 3 und einen Verdampfer 4. Ein Kompressor 5 sorgt über eine weitere Verzweigung 6 für die Zuführung von Luft in den Brenner 3. Der Brenner 3 gibt die erzeugte Wärme sowohl an den Verdampfer 4 als auch an einen weiteren Verdampfer 7 ab.

Der Kraftstofffluss ist jeweils mit dem Buchstaben A und der Luftstrom mit C gekennzeichnet.

Aus einem Wassertank 8 wird ein Wasserkreislauf gespeist. Der Wasserfluss wird mit B gekennzeichnet. Über eine Verzweigung 9 wird der Wasserfluss B in drei Zweige aufgeteilt und gelangt über einen dieser drei Zweige, wie nachfolgend näher erläutert wird, zum Verdampfer 7.

Ein Reformer 10 wird aus dem Verdampfer 4 mit Kraftstoff, aus dem Verdampfer 7 mit Wasserdampf und aus der Luftführung C über eine weitere Verzweigung 11 mit Luft versorgt. Zusätzlich erhält Reformer 10 Energie vom Brenner 3.

Die vorgeschriebene Anordnung muss nicht zwangsläufig in der beschriebenen Weise aufgebaut sein. Es sind auch Verfahrensvarianten denkbar, in denen nur Kraftstoff und Wasser sowie Kraftstoff und Luft in den Reformer eingespeist werden. Es sind ferner auch Verfahrensvarianten ohne Kraftstoffverdampfung möglich, beispielsweise durch Zerstäubung von Kraftstoff. Auch der Brenner 3 ist nicht in jeder Ausführung der Kraftstoffreformation erforderlich.

Im Reformer 10 wird der Kraftstoff, der aus Kohlenwasserstoff besteht, durch partielle Oxidation in Wasserstoff und CO₂ zerlegt. Hierbei entstehen Restmengen von CO, die bei den derzeit vorzugsweise eingesetzten Brennstoffzellen nicht tolerierbar sind. Aus diesem Grund sind in dem dargestellten Aufbau zwei weitere Reaktionsstufen 12, 13 nachgeschaltet, in denen CO unter Aufspaltung von Wasser zu CO₂ oxidiert wird. Hierbei wird zusätzlich Wasserstoff frei.

Den beiden Reaktionsstufen 12, 13 sind jeweils ein Wärmetauscher 14, 15 vorgeschaltet, um den Wasserstoffstrom D, der letzten Endes zur Brennstoffzelle geführt wird, zu kühlen.

Für die letzte Reaktionsstufe 13 wird über eine Zusammenführung 16 und eine Verzweigung 17 Luft zugegeben. Der Luftstrom C wird weiterhin in nicht näher dargestellter Weise auch der Brennstoffzelle zugeführt.

In Gegenstromrichtung zum wasserstoffhaltigen Stofffluss D wird Wasser von der Verzweigung 9 über die Wärmetauscher 14, 15 und über die Reaktionsstufen 12, 13 dem Verdampfer 7 zugeführt, wo es zur Weitergabe an den Reformer 10 verdampft wird.

Ein weiterer Wasserflusszweig von der Verzweigung 9 führt in wiederum nicht näher dargestellter Weise zur Brennstoffzelle und dient dort zur Membranbefeuchtung. Ein Wasserdampfrückfluss E von der Brennstoffzelle wird über einen Kondensator 18 geleitet und das daraus resultierende Wasser im Wassertank 8 gesammelt.

Anhand des Diagramms gemäß Fig. 1 ist erkennbar, wie ein Medium aus jeweils einem Reservoir in mehrere Stoffströme verzweigten und dosiert den jeweiligen Verbrauchern, z. B. dem Brenner 3, dem Reformer 10 oder den Reaktionsstufen 12, 13, zugeführt werden muss.

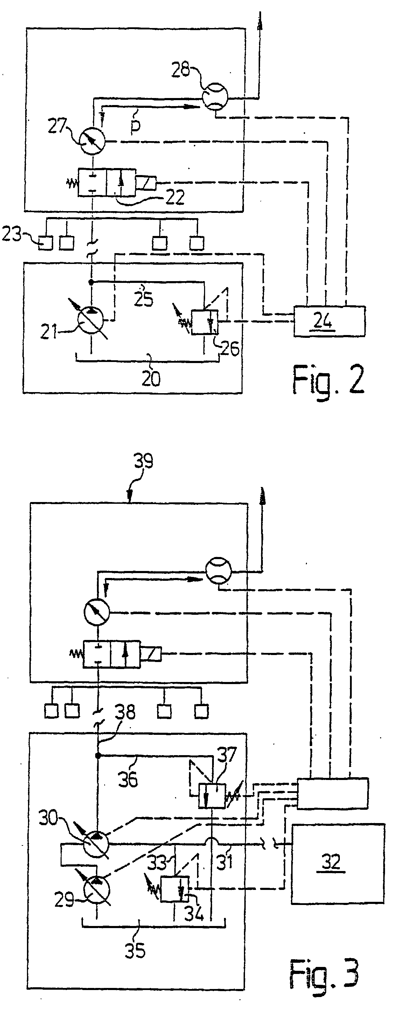

Dies wird beispielsweise durch eine erfindungsgemäße Ausführung gemäß Fig. 2 verwirklicht. Für jede Art von zu dosierendem Medium, d. h. beispielsweise sowohl für den Kraftstoff als auch für das Wasser, kann eine solche Anordnung vorgesehen werden.

In Fig. 2 sind mit gestrichelten Linien Steuerleitungen und mit durchgezogenen Linien Medienleitungen dargestellt. In einem Vorratstank 20 wird das entsprechende Medium bevorratet. Bezogen auf Fig. 1 könnte der Vorratstank 20 beispielsweise der Kraftstofftank 1 oder der Wassertank 8 sein. Eine Pumpe 21 sorgt für einen Vordruck, der vor einem Dosierventil 22 herrscht. Vor dem Dosierventil 22 sind Abzweigungen zu weiteren Dosierventilen 23 angedeutet, woraus ersichtlich wird, dass mit der Pumpe 21 unterschiedliche Verbraucher unter Zwischenschaltung der Dosierventile 22, 23 versorgt werden können.

Das Dosierventil 22 wird über eine Steuereinheit 24 getaktet. Um einen konstanten Druck vor den Dosierventilen 22, 23 zu gewährleisten, ist ein Bypass 25 mit einem Druckregler 26 vorgesehen. Die Pumpe 21 kann somit mit konstanter Drehzahl betrieben werden, wobei durch den Bypass 25 und den Druckregler 26 ein Rückfluss in den Vorratstank 20 stattfindet, der von der über das Dosierventil 22 abfließenden Menge abhängt, wobei stets ein gleicher Vordruck vor dem Ventil 22 herrscht.

In einer einfachen Ausführungsvariante der Erfindung wird die Dosierung durch Taktung des Steuerventils 22 bzw. 23 über die Steuereinheit 24 ohne Regelung des tatsächlich hinter den Dosierventilen 22, 23 resultierenden Stoffmengenstroms vorgenommen. Dies ist bei Anordnungen möglich, bei denen mit vorgegebenen Taktparametern, d. h. Taktfrequenz und Einschaltdauer, ein reproduzierbarer Mengenstrom hinter dem Dosierventil 22, 23 erzielbar ist.

Insbesondere dann, wenn dieser Stoffmengenstrom nicht proportional von den entsprechenden Steuerparametern abhängt, kann in einer besonderen Ausführungsform ein entsprechendes Kennfeld für die Steuerung verwendet werden, das den jeweils eingestellten Steuerparametern den zugehörigen Stoffmengenstrom zuordnet.

In einer Weiterbildung der Erfindung wird eine Regelung des Stoffmengenstroms hinter dem Dosierventil 22 vorgesehen. Hierzu sind vorliegend zwei Messwertaufnehmer, d. h. eine Druckmesseinheit 27 sowie eine Volumenstrommesseinheit 28 vorgesehen. Die beiden Messwertaufnehmer 27, 28 sind alternativ zueinander vorzusehen, was durch den Doppelpfeil p angedeutet ist. Es sind somit Ausführungsvarianten möglich, die entweder nur die Druckmesseinheit 27 oder nur die Volumenstrommesseinheit 28 aufweisen.

Sofern eine Volumenstrommesseinheit 28 vorgesehen wird, ist die erforderliche Regelgröße unmittelbar gemessen und steht somit der Steuereinheit 24 zur Regelung des Volumenstroms zur Verfügung. Die vergleichsweise aufwendige, zeitlich aufgelöste Messung des Volumenstroms lässt sich, wie oben angeführt durch eine einfachere, schnelle Druckmessung ersetzen.

Im Falle einer kostengünstigeren Druckmesseinheit 27 ist zunächst ein Zusammenhang zwischen dem gemessenen Druck hinter dem Dosierventil 22 und dem Volumenstrom herzustellen. Dieser Zusammenhang kann entweder in Form einer mathematischen Funktion, sofern alle Einflussparameter und deren Einfluss bekannt sind, ober aber in Form eines Kennfelds hergestellt werden, bei denen einmalig gemessenen Druckwerten gemessene Volumenstromwerte zugeordnet und abgespeichert werden, so dass während des späteren Betriebs die den jeweiligen Druckwerten zuzuordnenden Volumenströme aus dem Speicher abgerufen werden können.

Eine geregelte Version der Erfindung ist insbesondere dann von Vorteil, wenn Störgrößen den Volumenstrom beeinflussen, die nicht reproduzierbar und nicht rechnerisch erfassbar sind.

Als Störgrößen kommen beispielsweise Gegendruckstöße aus Dünnschichtverdampfern, usw. in Betracht. Da auch solche Gegendruckstöße einem gewissem periodischen Verhalten unterworfen sind, ist es empfehlenswert, mit der Taktfrequenz oberhalb dieser Störfrequenz zu liegen.

Eine andere Möglichkeit, Störgrößen in Form von Gegendruckstößen zu begegnen, besteht darin, den Vordruck über die Pumpe 21 zu erhöhen.

Eine weitere vorteilhafte Maßnahme ergibt sich dadurch, dass die Pumpe 21 und/oder der Druckregler 26 steuerbar ausgebildet werden. Über die Steuerung des Druckreglers 26 lässt sich der Vordruck vor den Dosierventilen 22, 23 steuern und kann somit zusätzlich als Steuergröße herangezogen werden. Durch die Steuerung der Pumpendrehzahl der Pumpe 21 kann die Pumpenleistung an den jeweils erforderlichen Mengenstrom angepasst werden und somit unnötige Stoffumwälzungen über den Bypass 25 vermieden werden. Dies führt zum einen zu einer Energieeinsparung und vermindert zum anderen die Erwärmung des Mediums im Vorratstank 20, die beim Umwälzen über den Bypass 25 unabdingbar ist.

Der Aufbau gemäß Fig. 3 unterscheidet sich von dem vorgenannten Ausführungsbeispiel dadurch, dass nunmehr eine doppelte Pumpenanordnung und eine doppelte Bypassanordnung vorhanden ist. Eine Niederdruckpumpe 29 speist eine Hochdruckpumpe 30 und stellt somit sicher, dass die Medienzufuhr der Hochdruckpumpe 30 frei von eventuellen Lufteinschlüssen ist.

Eine Niederdruckleitung 31 führt sodann zu einer Dosiereinheit 32, die der vorbeschriebenen Anordnung mit Dosierventil 22 entsprechen kann. Über einen Bypass 33 und einen Druckregler 34 wird zudem eine Medienrückführung in den Vorratstank 35 hergestellt, so dass der Vordruck auf der Niederdruckleitung 31 wiederum definiert ist.

Eine analoge Anordnung ist auf der Hochdruckseite durch einen Bypass 36 und einen weiteren Druckregler 37 aufgebaut. Auch hier findet der Rückfluss in den Vorratstank 35 statt.

Auch die Hochdruckleitung 38 führt zu einer Dosiereinheit 39, die wiederum dem oben angeführten Ausführungsbeispiel entsprechen kann.

Vorliegend sind sowohl die Niederdruckpumpe 29 als auch die Hochdruckpumpe 30 als steuerbare Pumpen eingezeichnet, was jedoch nicht zwangsläufig der Fall sein muss, sondern bereits eine weiterbildende Maßnahme der Erfindung darstellt. Ebenso sind die Druckregler 34 und 37 beide als steuerbare Druckregler ausgebildet, was die Ansteuerung des Vordrucks sowohl im Niederdruck- als auch im Hochdruckbereich ermöglicht, jedoch wiederum bereits eine vorteilhafte Weiterentwicklung der Erfindung ist.

Die Verwendung eines Hochdruckkreises, wie anhand des Ausführungsbeispiels gemäß Fig. 3 beschrieben, kann beispielsweise dann von Vorteil sein, wenn das geförderte Medium unter hohem Druck zerstäubt oder anderweitig für die anstehenden Reaktionen vorbereitet wird. Ein Hochdruckkreis kann auch bei druckabhängigen Störgrößen von Vorteil sein, die durch eine hohen Vordruck zu unterdrücken sind.

Wie anhand der bisherigen Beschreibung erkennbar ist, sind vielfältige vorteilhafte Weiterbildungen der Erfindung möglich. Wesentlich bleibt jedoch, dass durch die Verwendung einer Förderpumpe 21 in Verbindung mit einem Dosierventil 22 die Förderpumpe 21 nicht mehr als Dosierpumpe ausgelegt werden muss. Zugleich besteht in dieser Anordnung die Möglichkeit, mehrere Verbraucher des gleichen Mediums mit der gleichen Förderpumpe zu speisen.

### Bezugszeichenliste:

- 1: Kraftstofftank
- 2: Verzweigung
- 3: Brenner
- 4: Verdampfer
- 5: Kompressor
- 6: Verzweigung
- 7: Verdampfer
- 8: Wassertank
- 9: Verzweigung
- 10: Reformer
- 11: Verzweigung
- 12: Reaktionsstufe
- 13: Reaktionsstufe
- 14: Wärmetauscher
- 15: Wärmetauscher
- 16: Zusammenführung
- 17: Verzweigung
- 18: Kondensator
- 20: Vorratstank
- 21: Pumpe
- 22: Dosierventil
- 23: Dosierventil
- 24: Steuereinheit
- 25: Bypass
- 26: Druckregler
- 27: Druckmesseinheit
- 28: Volumenstrommesseinheit
- 29: Niederdruckpumpe
- 30: Hochdruckpumpe
- 31: Niederdruckleitung
- 32: Dosiereinheit
- 33: Bypass
- 34: Druckregler
- 35: Vorratstank
- 36: Bypass
- 37: Druckregler
- 38: Hochdruckleitung
- 39: Dosiereinheit

## Patentansprüche

1. Vorrichtung zur Zufuhr flüssiger Medien zu Verbrauchern einer Brennstoffzellenanlage, wie der Brennstoffzelle selbst, Kraftstoffumformungseinheiten oder dergleichen, mit einer Förderpumpe und einem steuerbaren Dosierventil zwischen der Förderpumpe und dem Verbraucher, **dadurch gekennzeichnet, dass** als Förderpumpe (21) eine Hochdruck- und eine Niederdruckpumpe (29, 30) vorgesehen ist.

2. Vorrichtung nach Anspruch 1, **dadurch gekennzeichnet, dass** mehrere Verbraucher (3, 10) des gleichen Mediums mit jeweils wenigstens einem steuerbaren Dosierventil (22) versehen sind, die derselben Förderpumpe (21) nachgeschaltet sind.

3. Vorrichtung nach einem der vorgenannten Ansprüche, **dadurch gekennzeichnet, dass** das Dosierventil (22) ein getaktetes Schaltventil ist.

4. Vorrichtung nach einem der vorgenannten Ansprüche, **dadurch gekennzeichnet, dass** die Einschaltdauer und/oder die Taktfrequenz des Dosierventils (22) steuerbar ist.

5. Vorrichtung nach einem der vorgenannten Ansprüche, **dadurch gekennzeichnet, dass** die Taktfrequenz größer als 10 Hz ist.

6. Vorrichtung nach einem der vorgenannten Ansprüche, **dadurch gekennzeichnet, dass** die Steuerung des Dosierventils (22) mittels einem abgespeicherten Kennfeld vorgesehen ist.

7. Vorrichtung nach einem der vorgenannten Ansprüche, **dadurch gekennzeichnet, dass** eine Regelung des Volumenstroms vorgesehen ist.

8. Vorrichtung nach einem der vorgenannten Ansprüche, **dadurch gekennzeichnet, dass** ein Messwertaufnehmer (28) zur Erfassung des Volumenstroms und/oder ein Messwertaufnehmer (27) zur Druckmessung in Stömungsrichtung hinter dem Dosierventil (22) angeordnet ist.

9. Vorrichtung nach einem der vorgenannten Ansprüche, **dadurch gekennzeichnet, dass** eine Kennfeldzuordnung des in Stömungsrichtung hinter dem Dosierventil (22) gemessenen Drucks zu dem dabei vorliegenden Volumenstrom vorgesehen ist.

10. Vorrichtung nach einem der vorgenannten Ansprüche, **dadurch gekennzeichnet, dass** eine in ihrer Drehzahl steuerbare Pumpe (21) vorgesehen ist.

11. Vorrichtung nach einem der vorgenannten Ansprüche, **dadurch gekennzeichnet, dass** ein Druckregler (26) in einer Bypassleitung (25) zwischen der Pumpe (21) und einem Vorratstank (20) vorgesehen ist.

12. Vorrichtung nach einem der vorgenannten Ansprüche, **dadurch gekennzeichnet, dass** der Druckregler (26) steuerbar ist.

## Claims

1. Device for supplying liquid media to consumers of a fuel cell system, such as the fuel cell itself, fuel reforming units or the like, having a feed pump and a controllable metering valve between the feed pump and the consumer, **characterized in that** a high-pressure pump and a low-pressure pump (29, 30) are provided as feed pump (21).

2. Device according to Claim 1, **characterized in that** a plurality of consumers (3, 10) of the same medium are provided with in each case at least one controllable metering valve (22) connected downstream of the same feed pump (21).

3. Device according to one of the preceding claims, **characterized in that** the metering valve (22) is a clocked switching valve.

4. Device according to one of the preceding claims, **characterized in that** the switching time and/or the clock frequency of the metering valve (22) is controllable.

5. Device according to one of the preceding claims, **characterized in that** the clock frequency is greater than 10 Hz.

6. Device according to one of the preceding claims, **characterized in that** the metering valve (22) is controlled by means of a stored characteristic diagram.

7. Device according to one of the preceding claims, **characterized in that** the volumetric flow is regulated.

8. Device according to one of the preceding claims, **characterized in that** a measured-value pick-up (28) for recording the volumetric flow and/or a measured-value pick-up (27) for pressure measurement is arranged downstream of the metering valve (22), as seen in the direction of flow.

9. Device according to one of the preceding claims, **characterized in that** there is a characteristic diagram association between the pressure measured downstream of the metering valve (22), as seen in the direction of flow, and the volumetric flow which is then present.

10. Device according to one of the preceding claims, **characterized in that** there is a pump (21) whose rotational speed can be controlled.

11. Device according to one of the preceding claims, **characterized in that** there is a pressure regulator (26) in a bypass line (25) between the pump (21) and a storage tank (20).

12. Device according to one of the preceding claims, **characterized in that** the pressure regulator (26) is controllable.

## Revendications

1. Dispositif pour alimenter en liquides des consommateurs dans une installation de piles à combustible, telle qu'une pile à combustible même, des unités de conversion de carburant ou analogues, comportant une pompe de transfert et une soupape de dosage, commandée, entre la pompe de transfert et le consommateur,
**caractérisé en ce que**
la pompe de transfert (21) est une pompe à haute pression et une pompe à basse pression (29, 30).

2. Dispositif selon la revendication 1,
**caractérisé en ce que**
plusieurs consommateurs (3, 10) du même liquide sont munis chaque fois d'au moins une soupape de dosage commandée (22) en aval de la même pompe de transfert (21).

3. Dispositif selon l'une des revendications précédentes,
**caractérisé en ce que**
la soupape de dosage (22) est une soupape de commutation à commande cadencée.

4. Dispositif selon l'une des revendications précédentes,
**caractérisé en ce que**
la durée de mise en oeuvre et/ou la fréquence de la cadence de la soupape de dosage (22) sont commandées.

5. Dispositif selon l'une des revendications précédentes,
**caractérisé en ce que**
la fréquence de cadence est supérieure à 10 Hz.

6. Dispositif selon l'une des revendications précédentes,
**caractérisé en ce que**
la commande de la soupape de dosage (22) est faite à l'aide d'un champ de caractéristiques enregistrées.

7. Dispositif selon l'une des revendications précédentes,
**caractérisé par**
une régulation du débit volumique.

8. Dispositif selon l'une des revendications précédentes,
**caractérisé par**
un capteur de mesure (28) pour détecter le débit volumique et/ou un capteur de mesure (27) pour mesurer la pression en aval de la soupape de dosage (22).

9. Dispositif selon l'une quelconque des revendications précédentes,
**caractérisé par**
une association du champ de caractéristiques de la pression mesurée en aval de la soupape de dosage (22) au débit volumique correspondant.

10. Dispositif selon l'une des revendications précédentes,
**caractérisé par**
une pompe (21) dont la vitesse de rotation est commandée.

11. Dispositif selon l'une des revendications précédentes,
**caractérisé par**
un régulateur de pression (26) dans une conduite de dérivation (25) entre la pompe (21) et un réservoir (20).

12. Dispositif selon l'une des revendications précédentes,
**caractérisé en ce que**
le régulateur de pression (26) est commandé.
